# EUROPEAN PATENT APPLICATION

(11) **EP 4 708 407 A1**
(43) Date of publication of application: **11.03.2026**
(21) Application number: 25794857.0
(22) Date of filing: 25.02.2025
(51) Int. Cl.: H01M 4/70, H01M 4/66, H01M 50/536, H01M 10/04

(54) **ELECTRODE CURRENT COLLECTOR, MANUFACTURING METHOD THEREFOR, AND SECONDARY BATTERY ELECTRODE ASSEMBLY COMPRISING SAME**

(30) Priority: 22.04.2024 KR 20240053096
(71) Applicant: LG Energy Solution, Ltd., Seoul 07335 (KR)
(72) Inventor: YOO, Su Yeon, Daejeon 34122 (KR); CHO, Woo Hyung, Daejeon 34122 (KR); LEE, Seok Kyeong, Daejeon 34122 (KR)
(74) Representative: Plasseraud IP
(86) International application number: PCT/KR2025/002621
(87) International publication number: WO 2025/225857

(57) **Abstract**

Disclosed are an electrode current collector including a first metal layer, a polymer resin layer provided on one surface of the first metal layer, and a second metal layer provided on one surface of the polymer resin layer, wherein the polymer resin layer is removed from a part of an uncoated portion corresponding to an electrode tab such that the first metal layer and the second metal layer face each other, a method of manufacturing the same, and a secondary battery electrode assembly including the same.

## Description

### [Technical Field]

This application claims the benefit of priority to Korean Patent Application No. 10-2024-0053096 filed on April 22, 2024, the disclosure of which is incorporated herein by reference in its entirety.

The present invention relates to an electrode current collector, a method of manufacturing the same, and a secondary battery electrode assembly including the same, and more particularly to an electrode current collector having a structure in which a resin layer is interposed between a pair of metal layers, a method of manufacturing the same, and a secondary battery electrode assembly including the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Particularly, in a pouch-shaped secondary battery, a plurality of positive electrodes each having a predetermined size and a plurality of negative electrodes each having a predetermined size are sequentially stacked in the state in which separators are interposed therebetween, and electrode tabs or a pair of electrode leads connected to the electrode tabs protrudes outward from one side or opposite sides of a case.

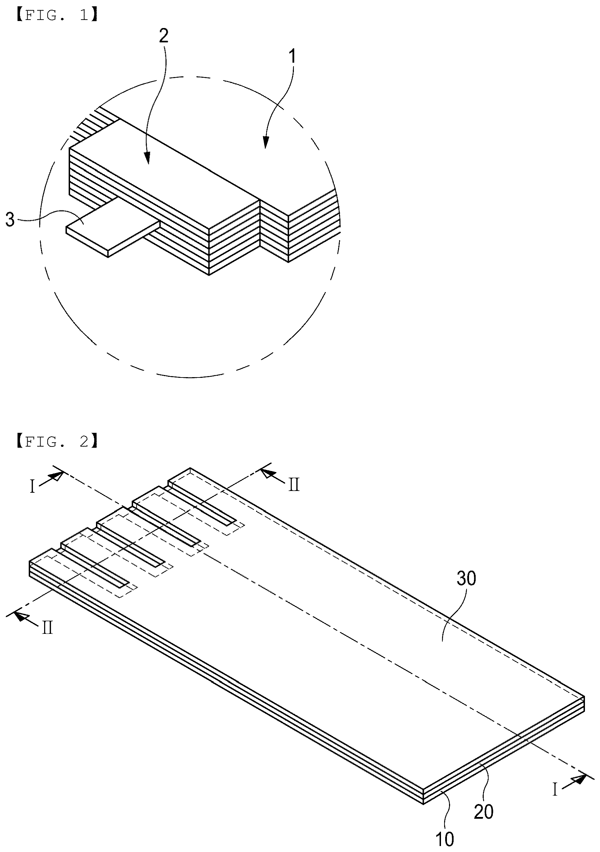

FIG. 1 is a partial perspective view of a conventional secondary battery. As shown in FIG. 1, a plurality of electrode tabs 2 extends outwardly from an electrode assembly 1, and an electrode lead 3 is interposed between the electrode tabs 2 and fixed to the tabs by welding.

Meanwhile, an aluminum current collector is generally used in a positive electrode to which a positive electrode active material is applied. However, since the aluminum current collector has been identified as the primary cause of ignition, research is underway to replace the aluminum current collector with a composite current collector, e.g., a current collector having a structure in which a resin layer is interposed between two metal layers.

When the current collector having the three-layer structure is used, high resistance is applied to the metal layer in case of short circuit since the metal layer is thin, it is possible to quickly cut off the flow of current, and therefore it is possible to improve safety.

However, in the current collector configured to have the three-layer structure, the resin layer interposed between the metal layers not only makes it difficult to energize the current collectors and the electrode lead but also makes it difficult to couple the electrode tabs to the electrode lead.

### (Prior Art Document)

(Patent Document 1) Korean Patent Application Publication No. 10-2022-0124358

### [Disclosure]

### [Technical Problem]

The present invention has been made in view of the above problems, and it is an object of the present invention to provide an electrode current collector having a structure in which electrode tabs and an electrode lead can be easily energized even if a resin layer is interposed between two metal layers, a method of manufacturing the same, and a secondary battery electrode assembly including the same.

It is another object of the present invention to provide an electrode current collector having a structure capable of securely fixing electrode tabs and an electrode lead even if a resin layer is interposed between two metal layers, a method of manufacturing the same, and a secondary battery electrode assembly including the same.

### [Technical Solution]

As a technical means for achieving the above objects, an electrode current collector according to an embodiment of the present invention includes a first metal layer (10), a polymer resin layer (20) provided on one surface of the first metal layer (10), and a second metal layer (30) provided on one surface of the polymer resin layer (20), wherein the polymer resin layer (20) is removed from a part of an uncoated portion corresponding to an electrode tab such that the first metal layer (10) and the second metal layer (30) face each other.

Also, in the electrode current collector according to the embodiment of the present invention, the removed part of the polymer resin layer (20) may have a linear shape with a certain width and length, the linear shape being formed in an overall length direction or an overall width direction of the electrode current collector.

Also, in the electrode current collector according to the embodiment of the present invention, the removed part of the polymer resin layer (20) may be formed such that a linear shape with a certain width and length is formed in a zigzag shape, the linear shape being formed in the overall length direction or the overall width direction of the electrode current collector.

Also, in the electrode current collector according to the embodiment of the present invention, the removed part of the polymer resin layer may be formed such that linear shapes with a certain width and length intersect each other.

Also, in the electrode current collector according to the embodiment of the present invention, the removed part of the polymer resin layer (20) may have a discontinuous linear shape with a certain width and length, the discontinuous linear shape being formed in the overall length direction or the overall width direction of the electrode current collector.

Also, in the electrode current collector according to the embodiment of the present invention, the removed part of the polymer resin layer (20) may be formed such that discontinuous linear shapes with a certain width and length intersect each other.

Also, in the electrode current collector according to the embodiment of the present invention, each of the first metal layer (10) and the second metal layer (20) may include an aluminum or copper material, and
the polymer resin layer may include at least one of polyethylene (PE), polypropylene (PP), polyethylene terephthalate (PET), and nylon.

In addition, an electrode current collector manufacturing method of manufacturing the electrode current collector according to the embodiment of the present invention includes a first step of preparing a polymer resin layer (20), a second step of forming a first metal layer (10) on the other surface of the polymer resin layer (20), a third step of removing a part of the polymer resin layer (20), and a fourth step of forming a second metal layer (30) on one surface of the polymer resin layer (20), wherein the polymer resin layer (20) is removed from a part of an uncoated portion corresponding to an electrode tab such that the first metal layer (10) and the second metal layer (30) face each other.

Also, the electrode current collector manufacturing method according to the embodiment of the present invention, in the third step, the part of the polymer resin layer (20) may be removed by etching.

Also, the electrode current collector manufacturing method according to the embodiment of the present invention, in the second step, the first metal layer (10) may be formed on the other surface of the polymer resin layer (20) by deposition.

Also, the electrode current collector manufacturing method according to the embodiment of the present invention, in the fourth step, the second metal layer (30) may be formed on the one surface of the polymer resin layer (20) by deposition.

In addition, an electrode current collector manufacturing method according to an embodiment of the present invention includes a first step of preparing a first metal layer (10), a second step of forming a polymer resin layer (20) on one surface of the first metal layer (10), a third step of removing a part of the polymer resin layer (20), and a fourth step of forming a second metal layer (30) on one surface of the polymer resin layer (20), wherein the polymer resin layer (20) is removed from a part of an uncoated portion corresponding to an electrode tab such that the first metal layer (10) and the second metal layer (30) face each other.

Also, the electrode current collector manufacturing method according to the embodiment of the present invention may further include a lamination step of applying heat and pressure to the first metal layer (10) and the polymer resin layer (20) so as to be bonded to each other between the second step and the fourth step.

In addition, a secondary battery electrode assembly including the electrode current collector according to the embodiment of the present invention includes at least one first electrode (100) including a first electrode current collector (11) and a first electrode tab (120) extending from one side of the first electrode current collector (110), at least one second electrode (200) including a second electrode current collector (210) and a second electrode tab (220) extending from one side of the second electrode current collector (210), a separator (300) interposed between the first electrode (100) and the second electrode, a first electrode lead (400) electrically connected to the first electrode tab (120), and a second electrode lead (500) electrically connected to the second electrode tab (220).

Also, in the secondary battery electrode assembly according to the embodiment of the present invention, the first electrode tab (120) and the first electrode lead (400) or the second electrode tab (220) and the second electrode lead (500) may be fixed to each other by welding.

### [Advantageous Effects]

As is apparent from the above description, in an electrode current collector according to the present invention, a method of manufacturing the same, and a secondary battery electrode assembly including the same, even if a resin layer is interposed between a pair of metal layers, a part of the resin layer at an uncoated portion of the electrode current collector is removed such that a part of the first metal layer and a part of the second metal layer face each other, whereby electrode current collectors and an electrode lead can be easily energized.

Also, in the electrode current collector according to the present invention, the method of manufacturing the same, and the secondary battery electrode assembly including the same, even if the resin layer is interposed between the pair of metal layers, a part of the resin layer at the uncoated portion of the electrode current collector is removed such that a part of the first metal layer and a part of the second metal layer face each other, whereby the electrode current collectors and the electrode lead can be easily and securely fixed to each other.

### [Description of Drawings]

FIG. 1 is a partial perspective view of a conventional secondary battery.
FIG. 2 is a perspective view of an electrode current collector according to a first embodiment of the present invention.
FIG. 3 is a sectional view taken in direction I-I of FIG. 2.
FIG. 4 is a sectional view taken in direction II-II of FIG. 2.
FIG. 5 is a sectional view taken in direction I-I of FIG. 2, showing a first modification of the first embodiment of the present invention.
FIG. 6 is a sectional view taken in direction II-II of FIG. 2, showing the first modification of the first embodiment of the present invention.
FIG. 7 are plan views of a polymer resin layer, showing a second modification of the first embodiment of the present invention.
FIG. 8 are a plan views of a polymer resin layer, showing a third modification of the first embodiment of the present invention.
FIG. 9 is a sectional view taken in direction I-I of FIG. 2, showing an electrode current collector according to a second embodiment of the present invention.
FIG. 10 is a sectional view taken in direction II-II of FIG. 2, showing the electrode current collector according to the second embodiment of the present invention.
FIG. 11 is a flowchart illustrating a method of manufacturing the electrode current collector according to the first embodiment of the present invention.
FIG. 12 is a conceptual view illustrating the method of manufacturing the electrode current collector according to the first embodiment of the present invention.
FIG. 13 is a flowchart illustrating a method of manufacturing the electrode current collector according to the second embodiment of the present invention.
FIG. 14 is a conceptual view illustrating the method of manufacturing the electrode current collector according to the second embodiment of the present invention.
FIG. 15 is an exploded perspective view of a secondary battery electrode assembly including the electrode current collector according to the first embodiment of the present invention.
FIG. 16 is another exploded perspective view of the secondary battery electrode assembly including the electrode current collector according to the first embodiment of the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, an electrode current collector according to the present invention, a method of manufacturing the same, and a secondary battery electrode assembly including the same will be described.

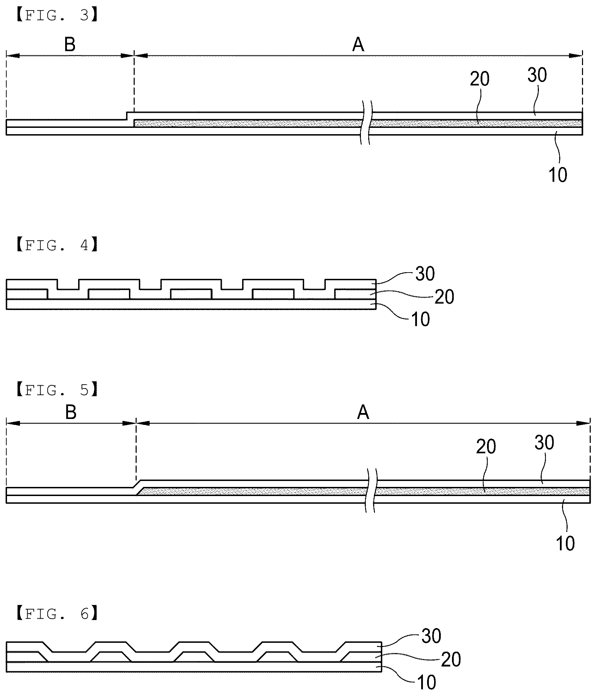

FIG. 2 is a perspective view of an electrode current collector according to a first embodiment of the present invention, FIG. 3 is a sectional view taken in direction I-I of FIG. 2, and FIG. 4 is a sectional view taken in direction II-II of FIG. 2.

Referring to FIGs. 2 to 4, the electrode current collector according to the first embodiment of the present invention includes a first metal layer 10, a polymer resin layer 20, and a second metal layer 30.

First, when the electrode current collector according to the present invention is configured as a positive electrode current collector, the first metal layer 10 may be configured to include an aluminum (Al) material, wherein the first metal layer 10 may have a thickness of approximately 0.5 to 10 µm.

Of course, the first metal layer 10 may be made of stainless steel, nickel, titanium, or sintered carbon, instead of aluminum, provided that the first metal layer exhibits high conductivity while the first metal layer does not induce any chemical change in a battery. Alternatively, the first metal layer may be made of aluminum or stainless steel, the surface of which is treated with carbon, nickel, titanium, or silver. In addition, the first metal layer may have a micro-scale uneven pattern formed on the surface thereof so as to increase the force of adhesion to an electrode active material, or may be configured in any of various forms, such as a film, a sheet, a foil, a net, a porous body, a foam body, or a non-woven fabric body.

In addition, the polymer resin layer 20 may be provided on one surface of the first metal layer 10. For example, in FIG. 3, one surface of the first metal layer 10 may be the surface facing the 12 o'clock direction.

The polymer resin layer 20 may be configured to include at least one material selected from polyethylene (PE), polypropylene (PP), polyethylene terephthalate (PET), and nylon. For example, the polymer resin layer 20 may be made of polyethylene terephthalate (PET) and may have a thickness of approximately 1 to 15 µm; however, the present invention is not limited thereto.

The polymer resin layer 20 may be removed from a part of an uncoated portion B corresponding to an electrode tab. In other words, a part of the polymer resin layer 20 corresponding to the uncoated portion B corresponding to the electrode tab may be removed.

The part of the polymer resin layer 20 removed from the part of the uncoated portion B may be linear with a certain width and length. More specifically, the removed part of the polymer resin layer 20 may be formed in the overall length direction of the electrode current collector. In this case, the removed part of the polymer resin layer 20 may be linear with a length that is less than the length of the uncoated portion B in the overall length direction.

Here, the uncoated portion B may be a region in which no active material is applied to the first metal layer 10 and the second metal layer 30 of the electrode current collector according to the present invention, and a coated portion A may be a region in which an active material is applied to the first metal layer 10 and the second metal layer 30 of the electrode current collector according to the present invention.

In addition, the polymer resin layer 20 may be provided on the entirety of the coated portion A, which is the remaining region of each of the first metal layer 10 and the second metal layer 30 excluding an electrode tab region formed on one side of each of the first metal layer and the second metal layer.

The second metal layer 30 may be provided on one surface of the polymer resin layer 20. Here, the second metal layer 30 may include the same material as the first metal layer 10. For example, if the first metal layer 10 includes an aluminum (Al) material, the second metal layer 30 may also include an aluminum (Al) material.

Of course, as described above, the second metal layer 20 may be made of stainless steel, nickel, titanium, or sintered carbon, instead of aluminum, provided that the second metal layer exhibits high conductivity while the first metal layer does not induce any chemical change in the battery. Alternatively, the second metal layer may be made of aluminum or stainless steel, the surface of which is treated with carbon, nickel, titanium, or silver. In addition, the second metal layer may have a micro-scale uneven pattern formed on the surface thereof so as to increase the force of adhesion to the electrode active material, or may be configured in any of various forms, such as a film, a sheet, a foil, a net, a porous body, a foam body, and a non-woven fabric body.

The second metal layer 30 is provided on one surface of the polymer resin layer 20, but the first metal layer 10 and the second metal layer 30 may face each other since the polymer resin layer 20 has been removed from the uncoated portion B corresponding to the electrode tab, as described above.

Since a part of the polymer resin layer 20 is removed, whereby no polymer resin layer 20 is provided in the part of the uncoated portion B where the first metal layer 10 and the second metal layer 30 face each other, it is easy for a plurality of electrode current collectors to be energized when the electrode current collectors are stacked.

Meanwhile, the second metal layer 30 may have a thickness of approximately 0.5 to 10 µm; however, the present invention is not limited thereto.

For example, the first metal layer 10, the polymer resin layer 20, and the second metal layer 30 may have the same thickness. For example, if the thickness of the first metal layer 10 is 5.0 µm and the thickness of the polymer resin layer 20 is 5.0 µm, the thickness of the second metal layer 30 may be 5.0 µm.

In another example, the first metal layer 10 and the second metal layer 30 may have the same thickness, but the polymer resin layer 20 may have a thickness different from the thickness of each of the first metal layer 10 and the second metal layer 30.

For example, if the thickness of the first metal layer 10 is 1.0 µm and the thickness of the polymer resin layer 20 is 6.0 µm, the thickness of the second metal layer 30 may be 1.0 µm.

In addition, the thickness of the second metal layer 30 in the region where the polymer resin layer 20 is provided (i.e., the region of the coated portion A and the uncoated portion B where the polymer resin layer 20 has not been removed) and the thickness of the second metal layer in the region where the polymer resin layer 20 is not provided (i.e., the region of the uncoated portion B where the polymer resin layer 20 has been removed) may be equal to each other.

However, the thickness of the second metal layer 30 is not limited thereto. The second metal layer 30 may be formed to a thickness of approximately 0.5 to 10 µm in the region where the polymer resin layer 20 is provided on the first metal layer 10 (i.e., in the region of the coated portion A and the uncoated portion B where the polymer resin layer 20 has not been removed), and may be formed to the sum of the thickness of the second metal layer and the thickness of the polymer resin layer 20 in the region where no polymer resin layer 20 is provided on the first metal layer 10 (i.e., in the region of the uncoated portion B where the polymer resin layer 20 has been removed).

Meanwhile, when the electrode current collector according to the present invention is configured as a negative electrode current collector, the negative electrode current collector is substantially the same as the positive electrode current collector described above except that only the materials of the first metal layer 10 and the second metal layer 30 are different.

For example, the first metal layer 10 may be configured to include a copper (Cu) material, wherein the first metal layer 10 may have a thickness of approximately 0.5 to 10 µm.

In addition, the second metal layer 30 may include the same material as the first metal layer 10. For example, if the first metal layer 10 includes a copper (Cu) material, the second metal layer 30 may also include a copper (Cu) material.

In addition, the second metal layer 30 may have the same thickness as the first metal layer 10. The second metal layer 30 may have a thickness of approximately 0.5 to 10 µm.

FIG. 5 is a sectional view taken in direction I-I of FIG. 2, showing a first modification of the first embodiment of the present invention, and FIG. 6 is a sectional view taken in direction II-II of FIG. 2, showing the first modification of the first embodiment of the present invention.

In the first modification of the electrode current collector according to the first embodiment of the present invention, an inclined surface may be formed on a side surface of the polymer resin layer 20.

More specifically, an inclined surface 21 may be formed on a side surface of the polymer resin layer 20 facing the region from which the polymer resin layer 20 has been removed.

In other words, the polymer resin layer 20 is removed at a part of the electrode tab region (the uncoated portion B), and the inclined surface 21 may be formed on the side surface of the polymer resin layer facing the removed region.

Referring to FIG. 5, the inclined surface 21 of the polymer resin layer 20 may be formed on one side (9 o'clock direction) facing the uncoated portion B of the polymer resin layer 20. In addition, referring to FIG. 6, the inclined surface 21 of the polymer resin layer 20 may be formed on both sides (3 o'clock to 9 o'clock direction) facing the ablated region of the polymer resin layer 20.

Due to the inclined surface 21, the area of the surface (6 o'clock direction in FIG. 6) of the polymer resin layer 20 in contact with the first metal layer 10 may be greater than the area of the surface (12 o'clock direction in FIG. 6) of the polymer resin layer 20 in contact with the second metal layer 30.

In addition, for example, the inclined surface 21 may be configured to have an inclination angle of greater than 0° and less than 90° based on one surface of the first metal layer 10.

The other configurations are identical to those of the electrode current collector according to the first embodiment described above, and therefore a redundant description will be omitted.

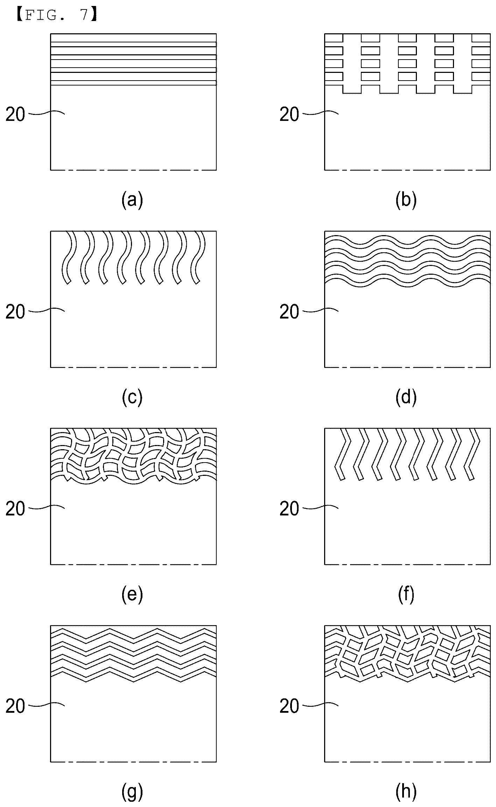

FIG. 7 are plan views of a polymer resin layer, showing a second modification of the first embodiment of the present invention.

In the second modification of the electrode current collector according to the first embodiment of the present invention, the removed part of the polymer resin layer 20 may have various linear shapes with a certain width and length.

First, referring to (a) of FIG. 7, linear shapes, which are the removed part of the polymer resin layer 20, may be formed in the overall width direction of the electrode current collector (3 o'clock to 9 o'clock direction in FIG. 7). In addition, referring to (b) of FIG. 7, the removed part of the polymer resin layer 20 may be formed such that the linear shapes with a certain width and length intersect each other.

In addition, referring to (c) to (e) of FIG. 7, the removed part of the polymer resin layer 20 may be formed such that linear shapes with a certain width and length are curved. The curved linear shapes of the polymer resin layer 20 may be formed in the overall length direction of the electrode current collector, in the overall width direction of the electrode current collector, or in a shape in which the curved linear shapes intersect each other.

In addition, referring to (f) to (h) of FIG. 7, the removed part of the polymer resin layer 20 may be formed such that linear shapes with a certain width and length are formed in a zigzag shape. The zigzag-shaped linear shapes of the polymer resin layer 20 may be formed in the overall length direction of the electrode current collector, in the overall width direction of the electrode current collector, or in a shape in which the zigzag-shaped linear shapes intersect each other.

Of course, the removed part of the polymer resin layer 20 may be the entire uncoated portion B. In this case, the polymer resin layer 20 may be provided for the coated portion A, which is the remaining region except for the electrode tab region formed on one side of the first metal layer 10 and the second metal layer 30 (the uncoated portion B).

The removed part of the polymer resin layer 20 may be formed as not only the linear shapes as described above but also various linear shapes with a certain width and length.

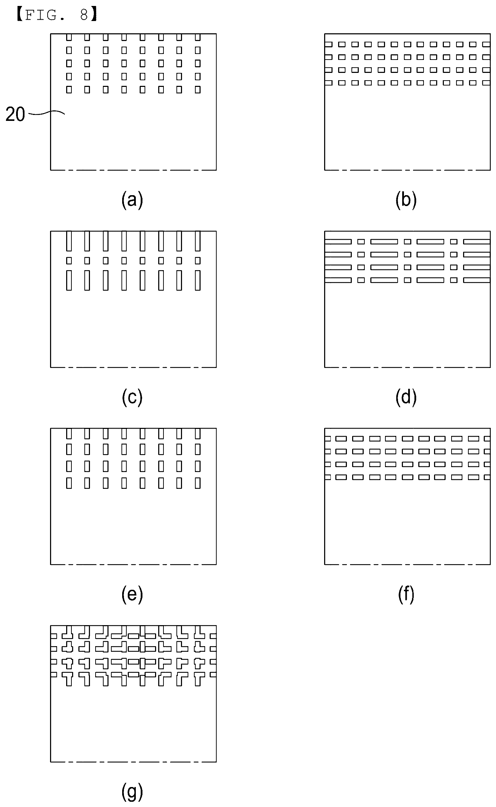

FIG. 8 are plan views of a polymer resin layer, showing a third modification of the first embodiment of the present invention.

In the third modification of the electrode current collector according to the first embodiment of the present invention, the removed part of the polymer resin layer 20 may be provided as various discontinuous linear shapes with a certain width and length.

First, referring to (a) of FIG. 8, discontinuous linear shapes formed by the dotted lines, which are the removed part of the polymer resin layer 20, may be formed in the overall length direction of the electrode current collector (12 o'clock to 6 o'clock direction in FIG. 8). In addition, referring to (b) of FIG. 8, the discontinuous linear shapes formed by the dotted lines may be formed in the overall width direction of the electrode current collector (3 o'clock to 9 o'clock direction in FIG. 8).

Also, in the removed part of the polymer resin layer 20, the discontinuous linear shapes with a certain width and length may be formed by dashed dotted lines.

Referring to (c) and (d) of FIG. 8, the discontinuous linear shapes formed by the dashed dotted lines may be formed in the overall length direction of the electrode current collector or in the overall width direction of the electrode current collector.

Also, in the removed part of the polymer resin layer 20, the discontinuous linear shapes with a certain width and length may be formed by broken lines.

Referring to (e) and (f) of FIG. 8, the discontinuous linear shapes formed by the broken lines may be formed in the overall length direction of the electrode current collector or in the overall width direction of the electrode current collector.

In addition, as shown in (g) of FIG. 8, the removed part of the polymer resin layer 20 may be formed such that the discontinuous linear shapes with a certain width and length intersect each other. Although, in (g) of FIG. 8, the removed part of the polymer resin layer 20 is formed in a shape in which the discontinuous linear shapes formed by the broken lines intersect each other, the present invention is not limited thereto, and the removed part of the polymer resin layer may be formed in a shape in which the discontinuous linear shapes formed by the dotted lines or the dashed dotted lines intersect each other.

Here, the shape in which the discontinuous linear shapes intersect each other means that the discontinuous linear shapes formed in the overall length direction of the electrode current collector and the discontinuous linear shapes formed in the overall width direction of the electrode current collector intersect each other.

The removed part of the polymer resin layer 20 may not only be formed as discontinuous linear shapes as described above, but may also be provided as various discontinuous linear shapes with a certain width and length.

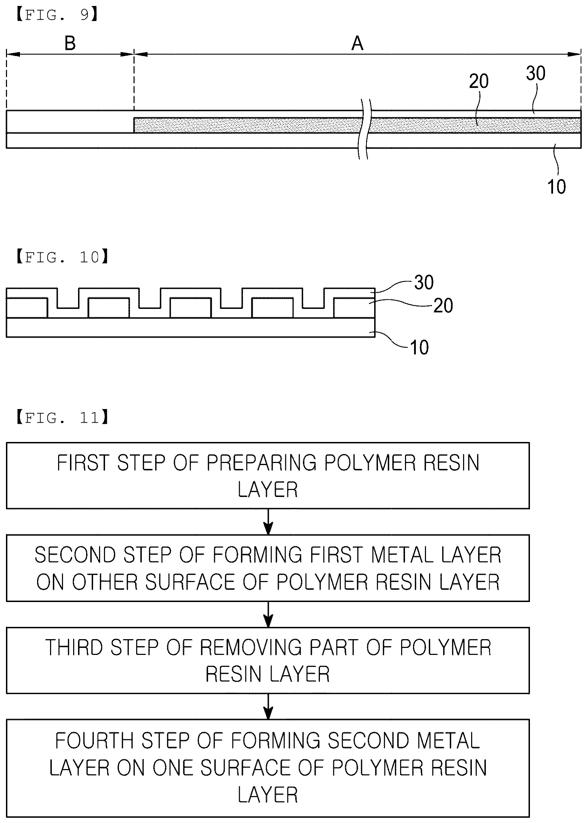

FIG. 9 is a sectional view taken in direction I-I of FIG. 2, showing an electrode current collector according to a second embodiment of the present invention, and FIG. 10 is a sectional view taken in direction II-II of FIG. 2, showing the electrode current collector according to the second embodiment of the present invention.

The electrode current collector according to the second embodiment of the present invention includes a first metal layer 10, a polymer resin layer 20, and a second metal layer 30, in the same manner as in the first embodiment.

However, in the second embodiment, the thickness of the first metal layer 10 may be greater than the thickness of the second metal layer 30, unlike the first embodiment. In other words, the thickness of the second metal layer 30 may be less than the thickness of the first metal layer 10.

For example, if the thickness of the first metal layer 10 is 9.0 µm and the thickness of the polymer resin layer 20 is 5.0 µm, the thickness of the second metal layer 30 may be 1.0 µm.

When the first metal layer 10 is thicker than the second metal layer 30, it is possible to more easily manufacture the electrode current collector, which will be described in more detail later.

In addition, the thickness of the second metal layer 30 in the region where the polymer resin layer 20 is formed (i.e., the region of the coated portion A and the uncoated portion B where the polymer resin layer 20 has not been removed) and the thickness of the second metal layer in the region where the polymer resin layer 20 is not formed (i.e., the region of the uncoated portion B where the polymer resin layer 20 has been removed) may be equal to each other.

However, the thickness of the second metal layer 30 is not limited thereto. The second metal layer 30 may be formed to a thickness of approximately 0.5 to 10 µm in the region where the polymer resin layer 20 is formed on the first metal layer 10 (i.e., in the region of the coated portion A and the uncoated portion B where the polymer resin layer 20 has not been removed), and may be formed to the sum of the thickness of the second metal layer and the thickness of the polymer resin layer 20 in the region where no polymer resin layer 20 is formed on the first metal layer 10 (i.e., in the region of the uncoated portion B where the polymer resin layer 20 has been removed).

In the electrode current collector according to the second embodiment of the present invention, an inclined surface may be formed on a side surface of the polymer resin layer 20 facing the removed part of the polymer resin layer 20, as in the first modification of the electrode current collector according to the first embodiment.

Also, in the electrode current collector according to the second embodiment of the present invention, the removed part of the polymer resin layer 20 may be formed as various linear shapes with a certain width and length, as in the second modification of the electrode current collector according to the first embodiment.

Also, in the electrode current collector according to the second embodiment of the present invention, the removed part of the polymer resin layer 20 may be formed as various discontinuous linear shapes with a certain width and length, as in the third modification of the electrode current collector according to the first embodiment.

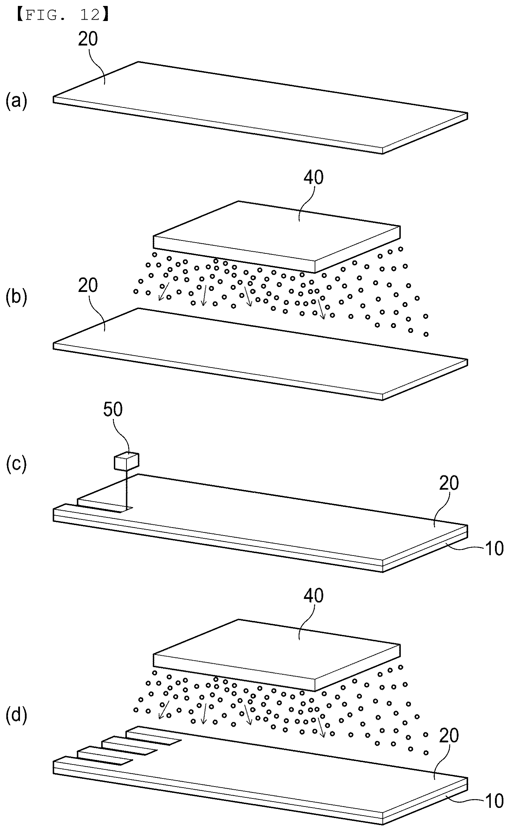

FIG. 11 is a flowchart illustrating a method of manufacturing the electrode current collector according to the first embodiment of the present invention, and FIG. 12 is a conceptual view illustrating the method of manufacturing the electrode current collector according to the first embodiment of the present invention.

Referring to FIGs. 2 to 4, 11, and 12, the method of manufacturing the electrode current collector according to the first embodiment of the present invention includes a first step of preparing a polymer resin layer 20, a second step of forming a first metal layer 10 on the other surface of the polymer resin layer 20, a third step of removing a part of the polymer resin layer 20, and a fourth step of forming a second metal layer on one surface of the polymer resin layer 20.

First, a method of manufacturing a positive electrode current collector will be described. In the first step, the polymer resin layer 20 is prepared in a sheet shape using at least one of polyethylene (PE), polypropylene (PP), polyethylene terephthalate (PET), and nylon.

In the second step, the first metal layer 10 is formed on the other surface of the polymer resin layer 20 (12 o'clock direction in (b)of FIG. 12), and the first metal layer may be formed using a deposition method.

Here, a physical vapor deposition method that vaporizes a solid-state metal, such as aluminum (Al), which is a target material, to form the first metal layer 10 or a chemical vapor deposition method that decomposes an aluminum (Al) metal salt or a polymer material containing an aluminum (Al) metal to form the first metal layer 10 may be used as the deposition method. Since these deposition methods are known in the art, the principles and other details thereof will be omitted.

In the third step, a part of the polymer resin layer 20 may be removed by an etching process. The part of the polymer resin layer removed by the etching process may be a part of an uncoated portion B corresponding to an electrode tab.

For example, referring to (c) of FIG. 12, in order to remove a part of the polymer resin layer 20, the polymer resin layer 20 may be disposed such that the other surface of the polymer resin layer 20 on which the first metal layer 10 is formed faces the 6 o'clock direction and one surface side of the polymer resin layer 20 faces the 12 o'clock direction.

A part of the polymer resin layer 20 may be removed in a linear shape with a certain width and length, and the linear shape may be formed in the overall length direction of the electrode current collector.

For example, an etching process to remove a part of the polymer resin layer 20 may be performed as a laser etching process using a laser unit 50. However, the present invention is not limited thereto, and a part of the polymer resin layer 20 may be removed through various etching processes.

Also, in the fourth step, the second metal layer 30 may be formed on one surface of the polymer resin layer 20, i.e., the surface facing the 12 o'clock direction in (d) of FIG. 12, using a vapor deposition method.

At this time, the target material moves not only to one surface of the polymer resin layer 20 but also to a part of an electrode tab region of the first metal layer 10, which does not overlap the polymer resin layer 20 but is removed by etching and exposed.

Accordingly, the first metal layer 10 and the second metal layer 30 may be provided so as to face each other in a part of an uncoated portion B corresponding to the electrode tab. That is, the second metal layer 30 may be in contact with a part of one surface of the first metal layer 10 and the entirety of one surface of the polymer resin layer 20.

Here, the target material for forming the second metal layer 30 is the same material as the first metal layer 10, such as aluminum (Al).

In addition, the second metal layer 30 may be formed to a thickness of approximately 0.5 to 10 µm; however, the present invention is not limited thereto.

As an example, the first metal layer 10, the polymer resin layer 20, and the second metal layer 30 may be formed so as to have the same thickness. For example, if the thickness of the first metal layer 10 is 5.0 µm and the thickness of the polymer resin layer 20 is 5.0 µm, the thickness of the second metal layer 30 may be 5.0 µm.

As another example, the first metal layer 10 and the second metal layer 30 may be configured to have the same thickness, but the polymer resin layer 20 may be configured to have a thickness different from the thickness of each of the first metal layer 10 and the second metal layer 30.

For example, if the thickness of the first metal layer 10 is 1.0 µm and the thickness of the polymer resin layer 20 is 6.0 µm, the thickness of the second metal layer 30 may be 1.0 µm.

In the second step the fourth step, the first metal layer 10 and the second metal layer 30 may be formed respectively on one surface and the other surface of the polymer resin layer 20 using a deposition unit 40.

The first modification of the electrode current collector according to the first embodiment of the present invention may be manufactured using a method identical to the electrode current collector manufacturing method described above, except that an inclined surface is formed on a side surface of the polymer resin layer facing the removed part of the polymer resin layer.

In particular, when the inclined surface 21 is formed on the side surface of the polymer resin layer facing the removed part of the polymer resin layer (see FIGs. 5 and 6), the metal target material may more easily reach the side surface of the polymer resin layer 20 in the deposition process, thereby reliably preventing the formation of an empty space between the first metal layer 10 and the second metal layer 30.

In addition, the second modification of the electrode current collector according to the first embodiment of the present invention and the third modification of the electrode current collector according to the first embodiment of the present invention may be manufactured using a method identical to the electrode current collector manufacturing method described above, except that only shapes removed by etching are different from each other.

A negative electrode current collector may be manufactured using a method identical to the electrode current collector manufacturing method described above, except that only the materials of the first metal layer 10 and the second metal layer 30 are different from each other.

For example, in the second step and the fourth step, the target material for forming the first metal layer 10 and the second metal layer 30 may include a copper (Cu) material.

As described above, a part of the polymer resin layer located on the uncoated portion corresponding to the electrode tab such that a part of the first metal layer is exposed may be removed by the etching process, whereby it is possible to manufacture an electrode current collector having a structure in which there is no polymer resin layer on the uncoated portion functioning as the electrode tab.

In addition, since the first metal layer and the second metal layer are formed by a physical vapor deposition method or a chemical vapor deposition method, it is possible to omit a separate process for fixing the first metal layer and the polymer resin layer to each other, fixing the first metal layer and the second metal layer to each other, or fixing the polymer resin layer and the second metal layer to each other.

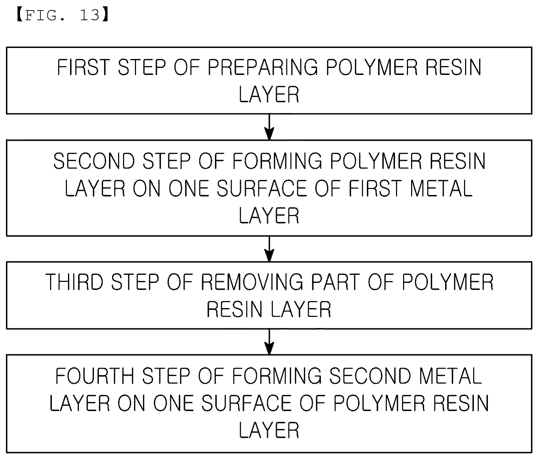

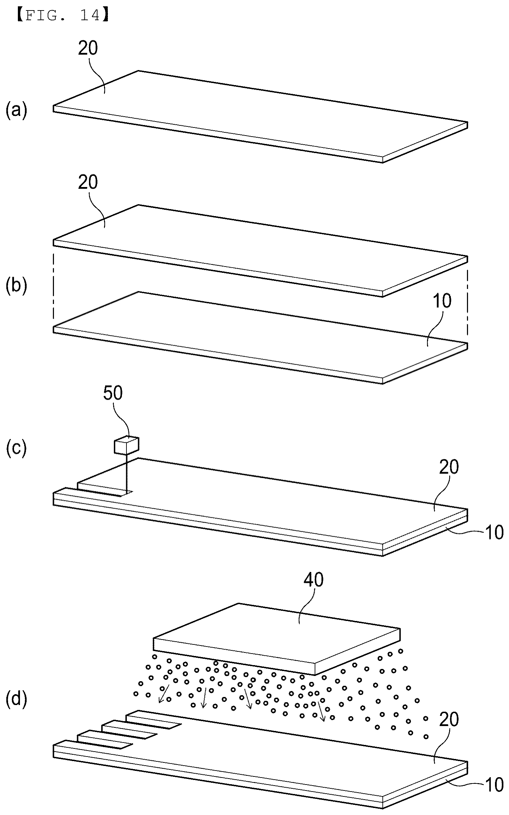

FIG. 13 is a flowchart illustrating a method of manufacturing the electrode current collector according to the second embodiment of the present invention, and FIG. 14 is a conceptual view illustrating the method of manufacturing the electrode current collector according to the second embodiment of the present invention.

Since the method of manufacturing the electrode current collector according to the second embodiment of the present invention is different from the method of manufacturing the electrode current collector according to the first embodiment only in some steps, the same steps will be briefly described or omitted.

Referring to FIGs. 9, 10, 13, and 14, the method of manufacturing the electrode current collector according to the second embodiment of the present invention includes a first step of preparing a first metal layer 10, a second step of forming a polymer resin layer 20 on one surface of the first metal layer 10, a third step of removing a part of the polymer resin layer 20, and a fourth step of forming a second metal layer 30 on one surface of the polymer resin layer 20.

First, for a positive electrode current collector, in the first step, the first metal layer 10 may be configured to include an aluminum (Al) material, wherein the first metal layer 10 may be formed in the shape of a thin sheet having a thickness of approximately 0.5 to 10 µm.

The second step is a step of forming a sheet-shaped polymer resin layer 20 having a certain thickness on one surface of the first metal layer 10. For example, in (b) of FIG. 14, one surface of the first metal layer 10 may be the surface facing the 12 o'clock direction.

In the third step, a part of the polymer resin layer 20, i.e., a part of an uncoated portion B corresponding to an electrode tab, may be removed by an etching process, which has already been described in detail and will be omitted.

Also, in the fourth step, the second metal layer 30 may be formed on one surface of the polymer resin layer 20 using a deposition method. For example, in (d) in FIG. 14, one surface of the polymer resin layer 20 may be the surface facing the 12 o'clock direction.

Here, a target material for forming the second metal layer 30 is aluminum (Al), which is the same material as the first metal layer 10.

As needed, the method of manufacturing the electrode current collector according to the second embodiment of the present invention may include, between the second step and the fourth step, a lamination step of applying heat and pressure to the first metal layer 10 and the polymer resin layer 20 for bonding therebetween.

In the lamination step, the first metal layer 10 and the polymer resin layer 20 may be bonded to each other. Of course, if the polymer resin layer 20 is formed by applying a polymer resin in a slurry state, the lamination step of applying heat and pressure may be omitted.

A negative electrode current collector may be manufactured using a method substantially identical to the method of manufacturing the electrode current collector according to the second embodiment described above, except that only the materials of the first metal layer 10 and the second metal layer 30 are different from each other.

For example, in the first step and the third step, each of the first metal layer 10 and the second metal layer 30 may include copper (Cu).

When the first metal layer 10 is thicker than the second metal layer 30, it is possible to more easily manufacture the electrode current collector. Specifically, when manufacturing the electrode current collector according to the second embodiment of the present invention, the film-shaped or sheet-shaped first metal layer 10 is prepared and then the polymer resin layer 20 and the second metal layer 30 are formed sequentially because it is possible to more easily manufacture the film-shaped or sheet-shaped first metal layer 10 if the first metal layer 10 is thicker.

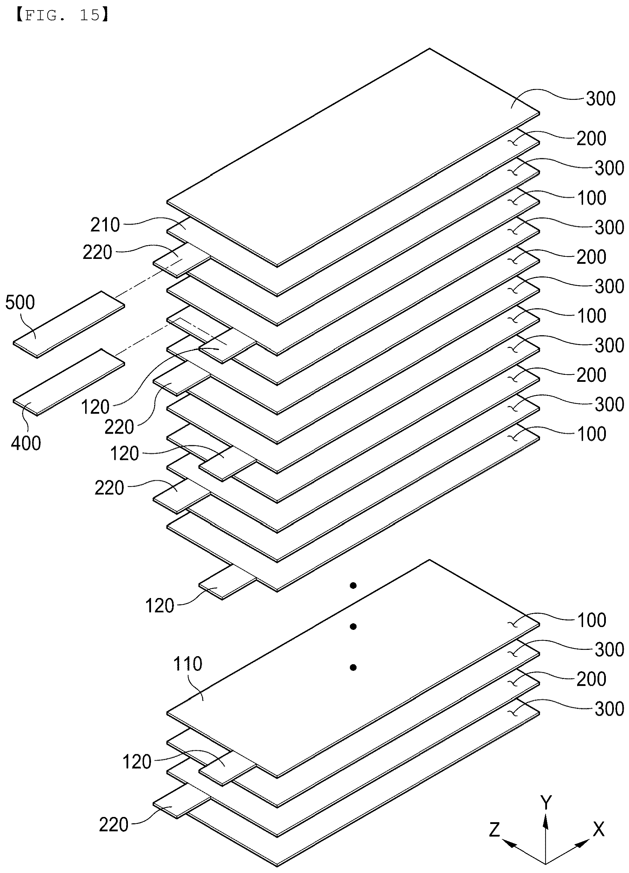

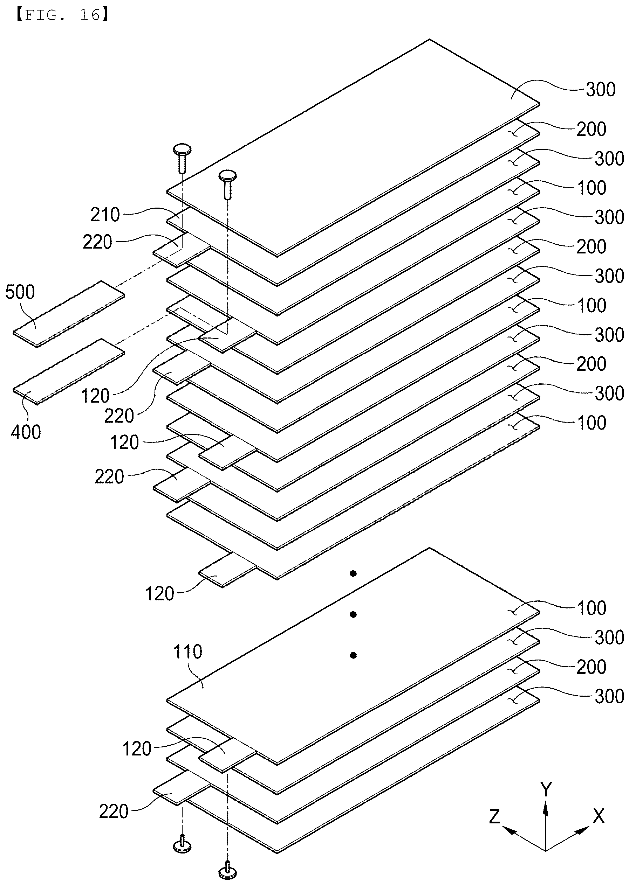

Next, a secondary battery electrode assembly will be described. FIG. 15 is an exploded perspective view of a secondary battery electrode assembly including the electrode current collector according to the first embodiment of the present invention, and FIG. 16 is another exploded perspective view of the secondary battery electrode assembly including the electrode current collector according to the first embodiment of the present invention.

As shown in FIGs. 15 and 16, the secondary battery electrode assembly according to the present invention has a structure in which at least one first electrode 100 including the electrode current collector according to the first embodiment, at least one second electrode 200, and at least one separator 300 are stacked.

Here, the first electrode 100 may be a positive electrode, and the second electrode 200 may be a negative electrode. The separator 300 may be located between the first electrode 100 and the second electrode 300, on the uppermost second electrode 300, and under the lowermost second electrode 300; however, the present invention is not limited thereto.

The first electrode 100 may include a first electrode current collector 110 constituted by the electrode current collector according to the third embodiment and a first electrode tab 120, wherein each of the first electrode current collector 110 and the first electrode tab 120 may have a three-layer structure in which a polymer resin layer is interposed between a first metal layer and a second metal layer each including an aluminum (Al) material.

A first electrode lead 400 is connected to the first electrode tab 120 of the first electrode 100, and a second electrode lead 500 is connected to a second electrode tab 220 of the second electrode 200.

Of course, a positive electrode active material is applied to a coated portion on one surface or each surface of the first electrode current collector 110.

Here, the positive electrode active material may be a positive electrode active material, and a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃; or LiNiₓMn₂₋ₓO₄ (0.01≤x≤0.6) may be used as the positive electrode active material.

Meanwhile, the positive electrode active material may be mixed with a conductive agent and a binder, and a filler may be further added as needed.

The conductive agent is generally added in an amount of 1 to 50 wt% based on the total weight of the mixture including the positive electrode active material. The conductive agent is not particularly restricted as long as the conductive agent exhibits high conductivity while the conductive agent does not induce any chemical change in a battery. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the positive electrode active material and the conductive agent and in binding with the current collector. The binder is generally added in an amount of 1 to 50 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, or various copolymers.

In addition, the second electrode 200 may include a second electrode current collector 210 and a second electrode tab 220, wherein each of the second electrode current collector 210 and the second electrode tab 220 may be configured to have a single layer including a copper (Cu) material or a three-layer structure in which a polymer resin layer is interposed between a pair of first and second metal layers.

Of course, a negative electrode active material is applied to a coated portion on one surface or each surface of the second electrode current collector 210.

For example, carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{Zz} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof, may be used as the negative electrode active material; however, the present invention is not limited thereto.

Of course, the negative electrode active material may be further mixed with a conductive agent and a binder to form a negative electrode active material layer.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), or polyacrylamide (PAM).

The separator 300 is interposed between the first electrode 100 and the second electrode 200 to prevent short circuit and to allow only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

A plurality of first electrode tabs 120 may be electrically connected to each other while being secured fixed to each other via a single first electrode lead 400, and a plurality of second electrode tabs 220 may be electrically connected to each other while being secured fixed to each other via a single second electrode lead 500.

Here, the electrode tabs and the electrode lead may be connected to each other by ultrasonic welding (e.g., FIG. 15) ; however, the present invention is not limited thereto, and the electrode tabs and the electrode lead may be connected to each other using a rivet (e.g., FIG. 16) configured to extend therethrough.

Meanwhile, the second electrode 200, i.e., each of the second electrode current collector 210 and the second electrode tab 220, may have a three-layer structure in which a polymer resin layer interposed between a first metal layer and a second metal layer each including a copper (Cu) material.

Of course, even in the case of the first electrode 100, each of the first electrode current collector 110 and the first electrode tab 120 may be configured to have a three-layer structure in which a polymer resin layer is interposed between a first metal layer and a second metal layer each including an aluminum (Al) material or a single layer including an aluminum (Al) material.

Meanwhile, although the secondary battery electrode assembly including the electrode current collector according to the first embodiment has been described with reference to FIGs. 15 and 16, it is obvious that the electrode current collector according to the second embodiment may also constitute an electrode assembly having the same structure as described above.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: First metal layer
20: Polymer resin layer 21: Inclined surface
30: Second metal layer
40: Deposition unit
50: Laser unit
100: First electrode
110: First electrode current collector
120: First electrode tab
200: Second electrode
210: Second electrode current collector
220: Second electrode tab
300: Separator
400: First electrode lead
500: Second electrode lead
A: Coated portion
B: Uncoated portion

## Claims

1. An electrode current collector comprising:
a first metal layer;
a polymer resin layer provided on one surface of the first metal layer; and
a second metal layer provided on one surface of the polymer resin layer,
wherein the polymer resin layer is removed from a part of an uncoated portion corresponding to an electrode tab such that the first metal layer and the second metal layer face each other.

2. The electrode current collector according to claim 1, wherein the removed part of the polymer resin layer has a linear shape with a certain width and length, the linear shape being formed in an overall length direction or an overall width direction of the electrode current collector.

3. The electrode current collector according to claim 1, wherein the removed part of the polymer resin layer is formed such that a linear shape with a certain width and length is formed in a zigzag shape, the linear shape being formed in an overall length direction or an overall width direction of the electrode current collector.

4. The electrode current collector according to claim 1, wherein the removed part of the polymer resin layer is formed such that linear shapes with a certain width and length intersect each other.

5. The electrode current collector according to claim 1, wherein the removed part of the polymer resin layer has a discontinuous linear shape with a certain width and length, the discontinuous linear shape being formed in an overall length direction or an overall width direction of the electrode current collector.

6. The electrode current collector according to claim 1, wherein the removed part of the polymer resin layer is formed such that discontinuous linear shapes with a certain width and length intersect each other.

7. The electrode current collector according to claim 1, wherein each of the first metal layer and the second metal layer comprises an aluminum or copper material, and
wherein the polymer resin layer comprises at least one of polyethylene (PE), polypropylene (PP), polyethylene terephthalate (PET), and nylon.

8. A method of manufacturing the electrode current collector according to any one of claims 1 to 7, the method comprising:
a first step of preparing a polymer resin layer;
a second step of forming a first metal layer on the other surface of the polymer resin layer;
a third step of removing a part of the polymer resin layer; and
a fourth step of forming a second metal layer on one surface of the polymer resin layer,
wherein the polymer resin layer is removed from a part of an uncoated portion corresponding to an electrode tab such that the first metal layer and the second metal layer face each other.

9. The method according to claim 8, wherein, in the third step, the part of the polymer resin layer is removed by etching.

10. The method according to claim 9, wherein, in the second step, the first metal layer is formed on the other surface of the polymer resin layer by deposition.

11. The method according to claim 9, wherein, in the fourth step, the second metal layer is formed on the one surface of the polymer resin layer by deposition.

12. A method of manufacturing the electrode current collector according to any one of claims 1 to 7, the method comprising:
a first step of preparing a first metal layer;
a second step of forming a polymer resin layer on one surface of the first metal layer;
a third step of removing a part of the polymer resin layer; and
a fourth step of forming a second metal layer on one surface of the polymer resin layer, wherein
the polymer resin layer is removed from a part of an uncoated portion corresponding to an electrode tab such that the first metal layer and the second metal layer face each other.

13. The method according to claim 12, further comprising a lamination step of applying heat and pressure to the first metal layer and the polymer resin layer so as to be bonded to each other between the second step and the fourth step.

14. A secondary battery electrode assembly comprising the electrode current collector according to any one of claims 1 to 7, the secondary battery electrode assembly comprising:
at least one first electrode comprising a first electrode current collector and a first electrode tab extending from one side of the first electrode current collector;
at least one second electrode comprising a second electrode current collector and a second electrode tab extending from one side of the second electrode current collector;
a separator interposed between the first electrode and the second electrode;
a first electrode lead electrically connected to the first electrode tab; and
a second electrode lead electrically connected to the second electrode tab.

15. The secondary battery electrode assembly according to claim 14, wherein the first electrode tab and the first electrode lead or the second electrode tab and the second electrode lead are fixed to each other by welding.
